Europäisches Patentamt

European Patent Office

Office européen des brevets

(11) Veröffentlichungsnummer: **0 133 188**
A1

# (12) EUROPÄISCHE PATENTANMELDUNG

(21) Anmeldenummer: 83107749.0

(51) Int. Cl.⁴: **B 29 D 9/00**

(22) Anmeldetag: 05.08.83

(43) Veröffentlichungstag der Anmeldung: 20.02.85
Patentblatt 85/8

(71) Anmelder: **Brückner Maschinenbau Gernot Brückner GmbH & Co. KG, Königsberger Strasse 5-7, D-8227 Siegsdorf (DE)**

(72) Erfinder: **Wellenhofer, Peter, Heideweg 17, D-8217 Grassau-Mietenkam (DE)**
Erfinder: **Eckart, Ludwig, Am Himmelreich 12, D-8227 Siegsdorf (DE)**

(74) Vertreter: **Flach, Dieter Rolf Paul, Dipl.-Phys. et al, Patentanwälte Andrae/Flach/Haug/Kneissl Prinzregentenstrasse 24, D-8200 Rosenheim (DE)**

(84) Benannte Vertragsstaaten: **AT BE CH DE FR GB IT LI LU NL SE**

(54) Verfahren zur Herstellung eines warmverformten Mehrlagenkunststoffverbundes, sowie Vorrichtung zur Durchführung des Verfahrens.

(57) Ein warmverformter Mehrlagenkunststoffverbund, insbesondere eine mehrschichtige gereckte Kunststoff-Folienbahn besteht aus mehreren Außenschichten, vorzugsweise aus Polypropylen und zumindest einer sich von dem Material der Außenschichten unterscheidenden Kernschicht, vorzugsweise aus Äthylen-Vinyl-Alkohol-Copolymer. Während der Herstellung des Mehrlagenkunststoffverbundes bzw. des Reckens der Kunststoff-Folienbahn wird diese thermisch auf den Recktemperaturbereich der Außenschicht(en) erwärmt. Um einen warmverformten Mehrlagenkunststoffverbund vor allem eine mehrschichtige gereckte Kunststoff-Folienbahn aus unterschiedlichen Kunststoffen mit hoher Sperrwirkung gegenüber Gasen zu schaffen, werden erfindungsgemäß Außenschicht(en) aus dielektrisch schlecht und die Kernschicht(en) aus dielektrisch gut erwärmbarem Kunststoffmaterial verwendet, wobei die Kernschicht(en) vor und/oder während des Reckvorganges in einem Hochfrequenzfeld dielektrisch bis auf eine Temperatur oberhalb der Recktemperatur der Außenschicht(en) erwärmt werden.

EP 0 133 188 A1

PATENTANWÄLTE

# ANDRAE · FLACH · HAUG

EUROPEAN PATENT ATTORNEYS

atentanwalt Dipl.-Phys. Flach, Max-Josefs-Platz 6, D-8200 Rosenheim .

**ROSENHEIM**
Dipl.-Phys. Dieter Flach
Max-Josefs Platz 6
D-8200 Rosenheim
Telefon: (0 80 31) 1 93 52
Telegramm: Physicist Rosenheim

**MÜNCHEN**
Dipl.-Chem. Dr. Steffen Andrae
Dipl.-Ing. Dietmar Haug
Steinstraße 44
D-8000 München 80
Telefon: (0 89) 48 20 89
Telegramm: pagema München
Telex: 5 216 281 afho d

Firma Brückner Maschinenbau Gernot Brückner GmbH & Co.
KG, Königsberger Str. 5-7, 8227 Siegsdorf

117 P 10

---

Verfahren zur Herstellung eines warmverformten Mehrlagenkunststoffverbundes, sowie Vorrichtung zur Durchführung
des Verfahrens

---

Die Erfindung betrifft ein Verfahren zur Herstellung eines
warmverformten Mehrlagenkunststoffverbundes, insbesondere
einer gereckten Kunststoff-Folienbahn nach dem Oberbegriff des Anspruches 1 sowie eine Vorrichtung zur Durchführung des Verfahrens nach dem Oberbegriff des Anspruches 11.

Uniaxial und biaxial gereckte Folien aus thermoplastischen Kunststoffen werden heutzutage in großen Mengen
für die verschiedensten technischen Anwendungen und für die Verpackung von Gegenständen aller Art hergestellt. Eine besondere Bedeutung kommt hierbei der biaxial verstreckten Folie aus Polypropylen zu, welche in großen Mengen in der Verpackung verwandt wird.

Bei der Verwendung von Polypropylen für die Verpackung von verschiedenen leicht verderblichen Lebensmitteln wird zwar eine gute Flüssigkeits-/Dampf-Sperrwirkung erzielt, jedoch erreicht die Sperrwirkung gegenüber Gasen, speziell gegenüber dem für diese Lebensmittel schädlichen Sauerstoff, in den aller meisten Fällen nicht aus.

Aus diesem Grunde werden biaxial verstreckte Polypropylenfolien insbesondere für die Verpackung von Lebensmitteln entweder durch Laminierung oder durch Beschichtung mit zusätzlichen Lagen von Kunststoffen versehen, die eine besonders gute Sperrwirkung gegenüber diesen Gasen wie Sauerstoff aufweisen. Eine besonders bekannte Technik ist z. B. die Beschichtung von biaxial verstreckten Polypropylenfolien mit Polyvinylidenchlorid-Copolymeren.

Diese benannten Verfahren haben jedoch den schwerwiegenden Nachteil, daß separate schwierig durchführbare Arbeitsgänge und umfangreiche Investitionen für die hierfür notwendigen Vorrichtungen nötig sind, wodurch die herzustellenden Produkte erheblich verteuert werden.

Es bestand von daher der Wunsch nach einer rationellen Herstellungsmethode von mehrschichtigen, uniaxial und/oder biaxial verstreckten Kunststoffolien, die im wesentlichen aus einem preisgünstigen Massenkunststoff bestehen sollten, wie z. B. Polypropylen. Ferner sollten diese Kunststoffolien zusätzlich eine hohe Sperrwirkung gegenüber Gasen aufweisen.

-3-

Aus der Herstellung von unverstreckten, mehrschichtigen Folien ist das Coextrusionsverfahren, das als Alternative zu den konventionellen Laminierungs- und Beschichtungsverfahren zählt, als besonders rationelle Methode zur kontinuierlichen Herstellung von mehrschichtigen Folien bekannt geworden. Bei diesem Verfahren werden die unterschiedlichen, in separaten Schneckenpressen bzw. Extrudern aufgeschmolzenen und ausgetragenen thermoplastischen Kunststoffe entweder in Laminar-Adaptern zusammengeführt und aus an sich bekannten Breitschlitzdüsen ausgepreßt oder aber in Mehrkanal-Düsen laminar zusammengeführt und ausgepreßt.

Entsprechende Coextrusionsanlagen sowie entsprechende Vorrichtungen zur uniaxial und/oder biaxialen Verstrekkung als kombinierte Vorrichtung sind nach dem Stand der Technik bekannt und werden beispielsweise dazu benutzt, kontinuierlich biaxial verstreckte Polypropylen-Kunststofffolien zu produzieren, deren Mittelschicht aus Polypropylen-Homopolymer und deren Außenschicht aus niedrig schmelzenden Polypropylen-Copolymeren oder aus Polyäthylen oder dergleichen bestehen.

Die so hergestellten Folien weisen aber keine Vorteile in Bezug auf die Gas-Sperreigenschaften auf, was zur Entwicklung von coextrudierten und biaxial verstreckten Folien geführt hat, die noch mehr Schichten aufweisen und von denen zumindest eine Schicht aus einem Polymer besteht, welches eine besonders hohe Sperrwirkung gegenüber Gasen besitzt. Evtl. zusätzlich vorgesehene Schichten dienen einer guten Hafteigenschaft zwischen den weiteren wesentlichen Schichten, beispielsweise zwischen den Innen- und Außenschichten.

Für die Gassperrschicht wird hierbei bei Mehrschichtfolien, die u. a. Polypropylen umfassen, beispielsweise ein amorphes Polyacrylnitril-Copolymer verwandt, das bei Temperaturen zwischen 110°C und 165°C für die Längsreckung und Temperaturen zwischen 150°C und 165°C für die Querreckung mitverstreckt wird. Diese Temperaturen haben sich für die Verstreckung von Polypropylen-Homopolymeren als optimal erwiesen aufgrund der Lage seiner Umwandlungspunkte. Die dabei auftretenden Streckverhältnisse sowohl in Längs- als auch in Querrichtung liegen dabei üblicherweise zwischen 4:1 und 10:1, wodurch ein Flächenreckverhältnis zwischen 40:1 und 50:1 erzielbar ist.

Das verwandte Polyacrylnitril-Copolymer weist aber verschiedene Nachteile auf, wie z. B. eine relativ geringe thermische Beständigkeit bei der Extrusion bzw. Coextrusion. Ein weiterer Nachteil ist darin begründet, daß die Sperrwirkung gegenüber Gasen im Vergleich zu anderen auf dem Markt befindlichen Kunststoffen deutlich geringer ist.

Aber auch ein Kunststoff mit höherer Sperrwirkung gegenüber Gasen wie z. B. ein Äthylen-Vinyl-Alkohol-Copolymer kann zur Herstellung derartiger Folien nicht verwandt werden. Extrudierte Mehrschichtenfolien mit diesem Copolymer, die mit den für Polypropylen optimalen Parametern verstreckt würden, führen nämlich zu einer unbrauchbaren Folie oder zumindest zu einer Folie, deren Gas-Sperrwirkung gegenüber einer gewöhnlichen biaxial verstreckten Polypropylenfolie nicht verbessert ist. Dies liegt darin begründet, daß die Sperrschicht aus Äthylen-Vinyl-Alkohol-Polymer beim biaxialen Verstrecken mit dem für Polypropylen optimalen Parametern sofort in eine netzartige Struktur aufreißen würde, welche zwischen den Deckschichten eingebettet ist, so daß Gase praktisch ohne Widerstand durch diese aufgerissene und aufgespaltete Ähtylen-Vinyl-Alkohol-Copolymerschicht hindurch diffundieren konnten. Versuche, eine mehrschichtige Folie zu schaffen, die neben einer hohen Flüssigkeits-, vor allem auch eine hohe Gasdichte aufweist und die zusätzlich billig herstellbar ist, sind bis heute fehlgeschlagen.

Demgegenüber ist es Aufgabe der Erfindung, ein Verfahren und eine Vorrichtung zur Durchführung des Verfahrens zur Herstellung eines warmverformten Mehrlagenkunststoffverbundes wie eine mehrschichtige gereckte Kunststofffolienbahn insbesondere unter Verwendung eines preisgünstigen Massenkunststoffes wie beispielsweise Polypropylen und zur Erzielung einer hohen Sperrwirkung auch gegenüber Gasen zu schaffen, obgleich die verwandten unterschiedlichen Materialien unterschiedliche optimale Bedingungen zur Warmverformung bzw. zum Verstrecken aufweisen. Die Aufgabe wird erfindungsgemäß bezüglich des Verfahrens gemäß den im kennzeichnenden Teil des Anspruches 1 und bezüglich der Vorrichtung gemäß den im kennzeichnenden Teil des Anspruches 11 angegebenen Merkmalen gelöst. Vorteilhafte Ausgestaltungen der Erfindung sind in den Unteransprüchen angegeben.

Es kann als durchaus überraschend bezeichnet werden, daß trotz mehrjähriger vergeblicher Versuche erfindungsgemäß auf so einfachem Wege es nunmehr möglich ist, insbesondere aus mehreren Schichten bestehende Kunststoff-Folienbahn nicht nur mit einer hohen Flüssigkeits-Sperrwirkung, sondern mit bisher nicht bekannter Sperrwirkung gegenüber der Diffusion von Gasen vor allem auch zur Verpackung von Lebensmitteln herzustellen. Dies wird im wesentlichen dadurch ermöglicht, daß der beispielsweise durch Coextrusion, Beschichtung, Laminierung etc. hergestellte Mehrlagenkunststoffverbund bzw. die Kunststoff-Folienbahn Schichten enthält, die im Hochfrequenzfeld gut erwärmbar sind, als auch Schichten, die in einem Hochfrequenzfeld dielektrisch schlecht erwärmbar sind, wodurch gewährleistet ist, daß die spezifischen Schichten jeweils auf die optimale Temperatur erwärmt werden können, um anschließend ein gemeinsames Verstrecken bzw. Warmverformen aller Schichten zur Erzielung der verbesserten Eigenschaften durchzuführen. Ein netzartiges Aufreißen insbesondere der verwandten Äthylen-Vinyl-Alkohol-Copolymerschicht wird hierdurch verhindert. Durch die gezielt unterschiedliche Temperaturerwärmung in den einzelnen Schichten lassen sich also gegenüber dem Stand der Technik deutlich verbesserte Mehrlagenkunststoffverbunde bzw. mehrschichtige Kunststoff-Folienbahnen herstellen.

In einer vorteilhaften Weiterbildung nach Anspruch 2 wird ein einfaches Aufheizverfahren für die Innenschichten ermöglicht, ohne daß zwischenzeitlich der Mehrlagenkunststoffverbund bzw. die Kunststoff-Folienbahn wieder abgekühlt werden muß, um den gewünschten Temperaturverlauf zu erzielen.

In einer besonders bevorzugten Ausführungsform nach Anspruch 4 ergibt sich eine besonders intensive und schnelle Erwärmung auf der die Kernschicht angrenzenden Schichten und zwar derart, daß durch die bewirkte thermische Erwärmung nicht nur ein Temperaturgradient von außen nach innen verläuft, sondern die gegebenenfalls dickeren äußeren Schichten von außen thermisch als auch von innen über die Wärmeleitung mittelbar von der dielektrisch erwärmbaren Kernschicht aus aufgeheizt werden.

In einer besonders bevorzugten Ausführungsform nach Anspruch 6 werden als Kernschichten ein Äthylen-Vinyl-Alkohol-Copolymer mit einem Schmelzpunkt von über 160°C, vorzugsweise 164°C bis 185°C verwandt, wobei der Vinylalkoholanteil nach Anspruch 7 mehr als 40 Mol-%, vorzugsweise 50 Mol-% bis 70 Mol-% beträgt. Zur Erzielung einer großen Gas-Sperrwirkung ist es also erfindungsgemäß erstmals möglich, Polypropylen gemeinsam mit einem Äthylen-Vinyl-Alkohol-Copolymer mit einem so hohen Kristallitschmelzpunkt und mit einem relativ so hohen Vinylalkohol-Gehalt von über 50 Mol-% gemeinsam zu verstrecken.

In einer vorteilhaften Ausgestaltung der Erfindung nach Anspruch 8 wird die Kernschicht auf über Kristallitschmelzpunkt dielektrisch erwärmt, wodurch die Kernschicht beweglich gemacht wird und somit die bei der ersten Verstreckung erfolgte Orientierung zum Teil wieder relaxieren kann.

Die Ansprüche 10 und 11 betreffen eine erfindungsgemäße Vorrichtung zur Durchführung des Verfahrens nach einem der Ansprüche 1 bis 9.

Weitere Vorteile, Einzelheiten und Merkmale der Erfindung ergeben sich aus dem nachfolgend anhand von Zeichnungen dargestellten Ausführungsbeispielen. Dabei zeigen im einzelnen:

Figur 1 :    eine schematische Schnittdarstellung durch eine Kunststoff-Folienbahn;

Figur 2 :    einen Temperaturgradientverlauf längs der Schnittdarstellung nach Figur 1;

Figur 3 :    eine schemaitsche Darstellung einer Coextrusions- und Reckanlage;

Figur 4 :   die Abhängigkeit des Kristallitschmelzpunktes und der Kristallisationstemperatur des Äthylen-Vinyl-Alkohol-Copolymers in Abhängkeit des Vinyl-Alkohols-Anteiles;

Figur 5 :   die Gassperrwirkung des Äthylen-Vinyl-Alkohol-Copolymers in Abhängigkeit des Vinyl-Alkohol-Anteiles.

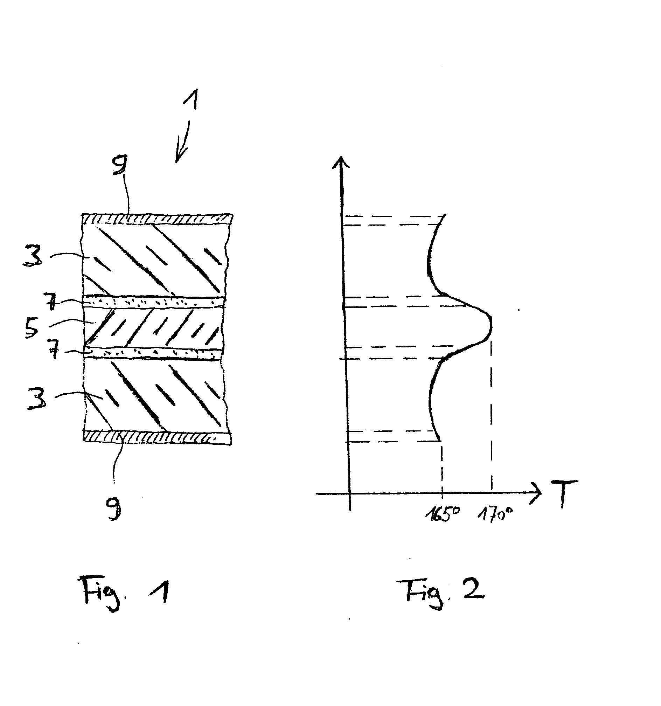

In Figur 1 ist im Querschnitt ausschnittweise eine mehrschichtige reckbare Kunststoffolienbahn 1 gezeigt, die zwei Außenschichten 3 und eine Kernschicht 5 umfaßt. Im gezeigten Ausführungsbeispiel sollen die beiden Außenschichten 3 aus dem sehr weit verbreiteten und kostengünstigen Massenkunststoff Polypropylen und die Kernschicht 5 aus einem Äthylen-Vinyl-Alkohol-Copolymer bestehen. Um eine entsprechende Verbindung zwischen den Kern- und Außenschichten zu ermöglichen, sind ferner noch jeweils eine Haftvermittler-Schicht 7 angrenzend an der Kernschicht 5 vorgesehen. Auf den Außenflächen sind schließlich und endlich noch Siegel- oder Schweißschichten 9 aufgebracht, die aus niedriger schmelzenden heißsiegelbaren Polymeren bestehen.

Bei dem gezeigten Ausführungsbeispiel handelt es sich also einschließlich der Haftvermittler- und der Siegel- oder Schweißschicht um eine sog. Siebenschicht-Folie, die in einem einzigen Schritt mittels Coextrusion herstellbar ist.

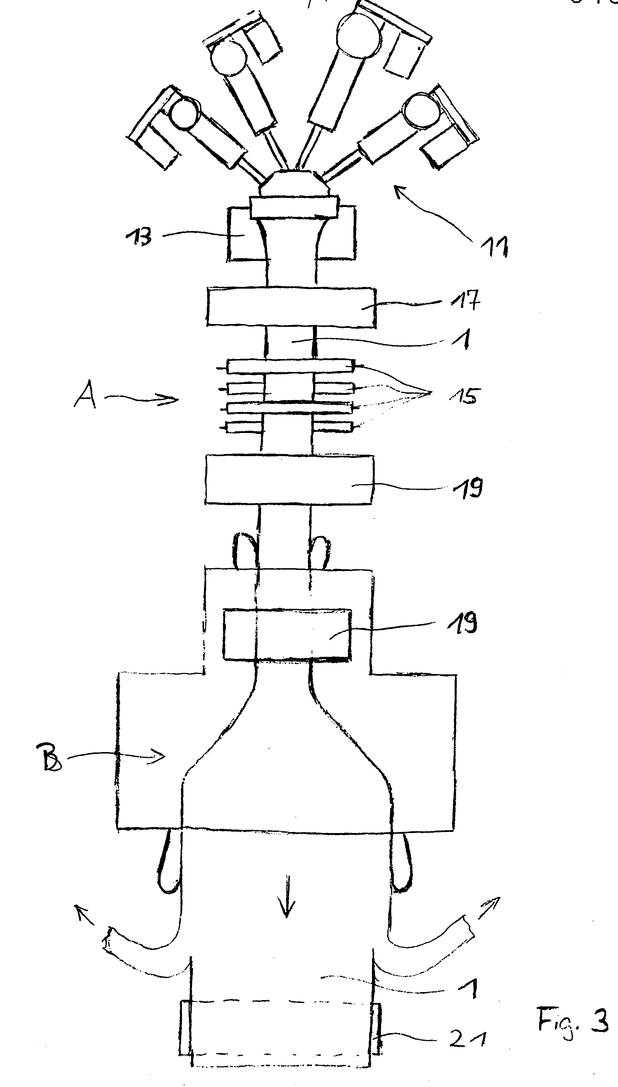

Im folgenden wird unter Bezugnahme auf Figur 3 der schematische Aufbau einer entsprechenden Vorrichtung zur Herstellung einer mehrschichtigen reckbaren Kunststoff-Folie erläutert.

In Figur 3 ist mit 11 ein Coextrusionssystem bezeichnet, das mit mehreren Extrudern zur Erzeugung einer Mehrschichtfolie versehen ist. Die sieben Schichten der Folie gemäß Figur 1 werden über die Mehrschicht-Breitschlitzdüse laminar kombiniert und einem Kühlwalzensystem 13 zugeführt. Die an dieser Stelle ca. 2 mm dicke Folie verläuft dann weiter zu einem Längsreckbereich A mit mehreren Reckwalzen 15, die mit unterschiedlicher Geschwindigkeit drehen und beispielsweise eine Längsreckung von 5:1 bewerkstelligen.

Vor dem Längsreckbereich oder während des Längsreckens wird dabei die Folie thermisch, z. B. durch Warmluft oder Heizwalzen aufgeheizt. Ferner ist noch eine Hochfrequenzheizvorrichtung 17 unmittelbar vor dem Längsreckbereich A angeordnet, die gegebenenfalls abweichend vom gezeigten Ausführungsbeispiel auch unmittelbar über dem Längsreckbereich A eingebaut sein kann.

Danach wird die so beispielsweise um einen Faktor 5 längsgereckte Folie einem Querreckbereich B weiter zugeführt, vor dem die Kunststoff-Folienbahn 1 ebenfalls wieder thermisch beispielsweise über erwärmte Luft aufgeheizt wird. Auch hier kann zusätzlich eine zweite Hochfrequenzheizvorrichtung 19 unmittelbar vor oder gegebenenfalls den Querreckbereich B mit überdeckend angeordnet sein. Fig. 3 zeigt zwei Einbaumöglichkeiten für die Hochfrequenzheizvorrichtung.

Die hier beispielsweise um einen Faktor 9 quergereckte Folie wird dann gesäumt, d.h. die Kanten, an denen die Folie befestigt und quergereckt wurde, werden entfernt, um schließlich auf einer Endwalze 21 die Kunststoff-Folienbahn 1 aufzuwickeln. Die Folie hat in ihrem Endzustand ca. eine Dicke von 10 bis 50 $\mu$.

Im folgenden wird auf den Aufheizvorgang der Kunststoff-folienbahn 1 vor dem Längs- bzw. Querrecken eingegangen.

Durch die jeweils vorgesehene thermische Erwärmung beispielsweise durch aufgewärmte Luft werden die Außenschichten 3 aus Polypropylen (Polypropylen-Copolymere) auf die gewünschte Recktemperatur, beispielsweise auf 160-165°C aufgeheizt. Während dieses Aufheizvorganges fällt naturbedingt der Temperaturgradient zur Mitte der Kunststoff-Folienbahn hin ab.

Durch die zusätzliche dielektrische Erwärmung mittels der Hochfrequenzheizvorrichtung 17 bzw. 19 wird die Kernschicht 5 gezielt auf die Temperatur aufgeheizt, um eine optimale gemeinsame Verstreckung aller Schichten zu gewährleisten. Dazu ist es natürlich erforderlich, daß diese Kernschicht 5 aus einem dielektrisch gut und die Außenschichten 3 aus einem dielektrisch schlecht oder gar nicht erwärmbaren Material bestehen. Dies ist beispielsweise bei Verwendung von Polypropylen als Außenschichten 3 und der Verwendung von Äthylen-Vinyl-Alkohol-Copolymeren für die Kernschicht 5 gegeben. Während dieses gezielten Aufheizvorganges läßt sich dabei leicht ein Temperaturverlauf gemäß Figur 2 erzielen, aus dem ersichtlich ist, daß die Kernschicht 5 in gewünschtem Maße auf eine höhere Temperatur als die Außenschichten 3 erwärmt werden kann. Über diese Hochfrequenzheizstrecke innerhalb jeder Vorheizstrecke der Längs- bzw. Querstreckung bewirkt also, daß der Folienquerschnitt nicht nur von der Oberfläche her über die Wärmeleitung durchgewärmt, sondern vielmehr das als Kernschicht 5 eingelagerte Polymer direkt beheizt wird, sofern dieses aufgrund seines chemischen Aufbaues und seiner physikalischen Eigenschaften im Hochfrequenzfeld gut erwärmbar ist.

0133188

Dabei hat sich gezeigt, daß die Verstreckung dieser Kernschicht 5 innerhalb der mehrschichten Kunststoff-Folienbahn 1 dadurch erleichtert wird, daß die Temperatur dieser Kernschicht auf ein Niveau am oder vorzugsweise über dem Kristallitschmelzpunkt gebracht wird. Dieses relativ hohe Temperaturniveau bewirkt, daß die Kernschicht 5 beim nachfolgenden uniaxialen oder biaxialen Streckvorgang im thermoplastischen Bereich gezogen wird und damit ein geringerer Orientierungsgrad der molekularen Struktur dieser Kernschicht erreicht wird.

Dieser geringere Orientierungsgrad bei vergleichbaren Streckverhältnis der Kernschicht hat zwei Vorteile.

Zum einen kann die Mehrschichtenfolie höheren Streckverhältnissen unterzogen werden, was aufgrund des daraus resultierenden hohen Orientierungsgrades der Außenschichten zur Verbesserung der Gebrauchseigenschaften einer solchen Folie führt. Zum anderen neigt die Kernschicht 5 einer so hergestellten Kunststoff-Folienbahn 1 weniger dazu aufzuspleißen, wenn sie in einem zweiten Streckvorgang senkrecht zur ersten Verstreckung orientiert wird, wie dies z. B. bei der sequenziellen biaxialen Verstreckung der Fall ist.

Da die Gassperrwirkung der verwandten Äthylen-Vinyl-Alkohol-Copolymere durch eine gewisse, begrenzte Molekülorientierung wesentlich gesteigert werden kann, ergibt sich durch Verwendung des erfindungsgemäßen Verfahrens der Vorteil, daß durch die Wahl einer geeigneten Energiemenge für die Hochfrequenzerwärmung das Gasbarrierematerial auf ein Temperaturniveau gebracht werden kann, welches einerseits zu einer leichten, störungsfreien Verstreckung führt und andererseits die Erzielung eines für eine maximale Gas-Sperrwirkung optimalen Orientierungsgrades ermöglicht.

Bei sequenziellen biaxialen Verstreckungen ist es bei geeigneter Wahl der Verarbeitungsbedingungen und Polymere auch möglich, mit einer einzigen Hochfrequenz-Heizstrecke auszukommen, welche sich zwischen dem ersten Streckbereich A und dem zweiten Streckbereich B befindet. Die Verwendung einer Hochfrequenz-Heizstrecke an dieser Stelle bewirkt, daß die Molekularstruktur der Kernschicht aufgrund deren Erwärmung auf oder über dem Kristallitschmelzpunkt beweglich gemacht wird und somit die, bei der ersten Verstreckung erfolgte Orientierung zum Teil wieder relaxieren kann. Darüber hinaus bewirkt die Erwärmung der Kernschicht an dieser Stelle, daß der durch die zweite Streckung erzielte Orientierungsgrad begrenzt bleibt, weil die Orientierung im thermoplastischen Bereich erfolgt.

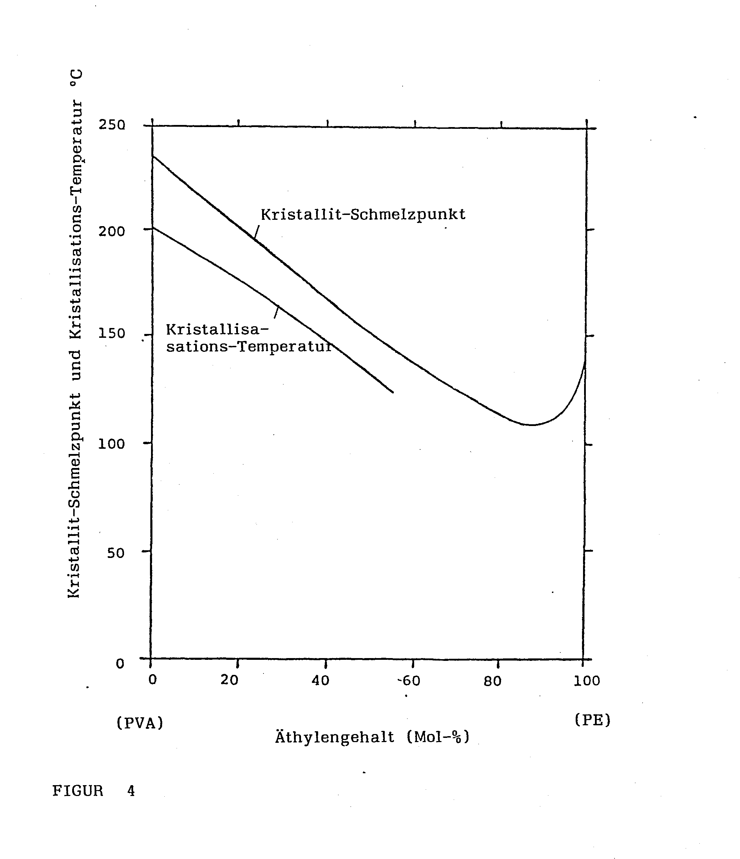

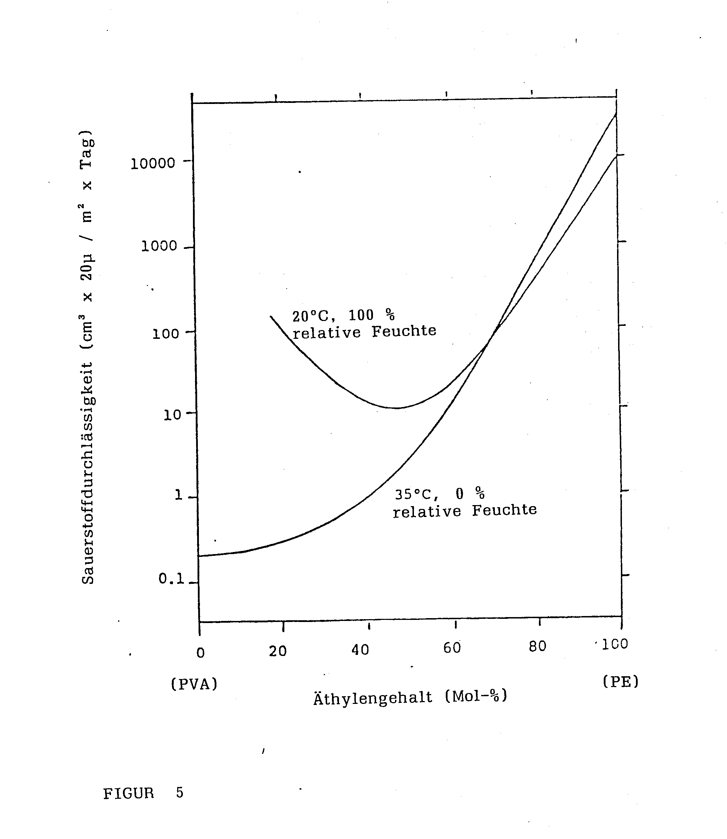

Im folgenden wird noch auf die im Anhang wiedergegebene Fig. 4 verwiesen, woraus ersichtlich ist, daß ein sinkender Anteil des Vinylalkohols und damit ein steigender Anteil des Äthylens die Kristallisationstemperatur und Kristallitschmelzpunkt des Äthylen-Vinyl-Alkohol-Copolymers senkt. Dies käme bis zu einem gewissen Grad zwar einer etwas günstigeren Streckbarkeit entgegen, hat aber zum Nachteil, daß die Sperrwirkung des Polymers gegenüber Gasen erheblich gesenkt wird, was deren Einsatz insbesondere bei der Lebensmittelverpackung verschlechtert oder gar ausschließt. Da aber im beschriebenen Ausführungsbeispiel die Kunststoff-Folienbahn 1 zusätzlich noch dielektrisch erwärmt wird, können Äthylen-Vinyl-Alkohol-Copolymere mit einem höheren Anteil an Vinylalkohol und damit mit einem relativ hohen Kristallitschmelzpunkt verwandt werden, da diese Kernschichten gezielt erheblich höher aufheizbar sind, als die Außenschichten. Die guten Gasbarriere-Eigenschaften in Abhängigkeit des Vinyl-Alkohol-Anteiles ergeben sich dabei aus Figur 5.

0133188

Ferner soll noch darauf hingewiesen werden, daß die dielektrische Erwärmung der Kernschicht auch derart erfolgen kann, daß die thermische Erwärmung der Außenschichten noch durch die Wärmeleitung von der Kernschicht aus von innen her mitunterstützt wird, so daß auch die Außenschichten gleichmäßiger auf die optimale Recktemperatur erwärmt werden.

Das oben beschriebene Verfahren ist dabei ferner unabhängig davon anwendbar, ob die Haftvermittlungsschichten 7 selbst dielektrisch nicht oder gut erwärmbar sind. Als günstig hat sich aber in der Praxis erwiesen, eine Haftvermittlungsschicht mit durchschnittlicher dielektrischer Erwärmung zu verwenden, wodurch der gem. Fig. 2 gezeigte Temperaturverlauf noch weiter abgestuft wird.

Abschließend wird darauf hingewiesen, daß das beschriebene Verfahren und im Grunde nach auch die Vorrichtung zur Durchführung des Verfahrens nicht nur zur Herstellung von mehrschichtigen reckbaren Kunststoff-Folienbahnen, sondern auch zur Herstellung von Flaschen, Behältern etc. geeignet ist, die durch Warmverformung oder Tiefziehen eines Mehrlagenkunststoffverbundes geformt werden.

Abweichend vom gezeigten Ausführungsbeispiel ist eine dielektrische Erwärmung nicht nur bei einer stufenweisen Verstreckung einer Folie, sondern auch bei einer simultanen Längs- und Querverstreckung ebenso möglich.

Wie dargestellt erfolgt die dielektrische Erwärmung, auch Mikrowellenerwärmung genannt, bei Einwirkung eines hochfrequenten elektrischen Wechselfeldes. Die Frequenzen liegen dabei in dem üblichen Bereich, etwa oberhalb 500 MHz, meist oberhalb $10^3$MHz.

PATENTANWÄLTE

0133188

# ANDRAE · FLACH · HAUG

### EUROPEAN PATENT ATTORNEYS

. Patentanwalt Dipl.-Phys. Flach, Max-Josefs-Platz 6, D-8200 Rosenheim .

**ROSENHEIM**
Dipl.-Phys. Dieter Flach
Max-Josefs Platz 6
D-8200 Rosenheim
Telefon: (0 80 31) 1 93 52
Telegramm: Physicist Rosenheim

**MÜNCHEN**
Dipl.-Chem. Dr. Steffen Andrae
Dipl.-Ing. Dietmar Haug
Steinstraße 44
D-8000 München 80
Telefon: (0 89) 48 20 89
Telegramm: pagema München
Telex: 5 216 281 afho d

Firma Brückner Maschinenbau Gernot Brückner GmbH & Co.
KG, Königsberger Str. 5-7, 8227 Siegsdorf

117 P 10

Verfahren zur Herstellung eines warmverformten Mehrlagenkunststoffverbundes, sowie Vorrichtung zur Durchführung des Verfahrens

Ansprüche:

1. Verfahren zur Herstellung eines warmverformten Mehrlagenkunststoffverbundes, insbesondere einer mehrschichtigen gereckten Kunststoff-Folienbahn, die aus einer oder mehreren Außenschicht(en), vorzugsweise aus Polypropylen und zumindest einer sich von dem Material der Außenschicht(en) unterscheidenden Kernschicht besteht, wobei die Folienbahn vor oder/und während des Warmverformens bzw.

-01

Reckens thermisch auf den Recktemperaturbereich der Außenschicht(en) erwärmt wird, **dadurch gekennzeichnet,** daß die Außenschicht(en) aus dielektrisch schlecht und die Kernschicht(en) aus dielektrisch gut erwärmbaren Kunststoffmaterialen bstehen, wobei die Kernschicht(en) vor und/oder während eines Reckvorganges in einem Hochfrequenzfeld dielektrisch auf eine Temperatur erwärmt wird, die oberhalb der Recktemperatur der Außenschicht(en) liegt.

2. Verfahren nach Anspruch 1, **dadurch gekennzeichnet,** daß während des thermischen und dielektrischen Aufheizvorganges unter Vermeidung einer Zwischenkühlung die Temperatur der Außenschicht(en) bis auf deren Recktemperaturbereich kontinuierlich erhöht wird.

3. Verfahren nach Anspruch 1 oder 2, **dadurch gekennzeichnet,** daß bei Herstellung einer Kunststoff-Folienbahn die Längs- oder Quer- oder simultane Längs- und Querverstreckung unmittelbar nach der dielektrischen Erwärmung erfolgt.

4. Verfahren nach einem der Ansprüche 1 bis 3, **dadurch gekennzeichnet,** daß die innere(n) Kernschicht(en) so stark und so lange im Hochfrequenzfeld dielektrisch erwärmt werden, daß der Temperaturgradient auch in benachbarten, dielektrisch schlecht erwärmbaren Schichten durch diese zusätzliche Wärmeleitung erhöht wird.

5. Unter Verwendung von Zwischenschichten als Haftvermittler zwischen Kern- und Außenschicht(en), **dadurch gekennzeichnet,** daß als Haftvermittler Materialien mit durchschnittlicher dielektrischer Erwärmung verwendet werden.

6. Verfahren nach einem der Ansprüche 1 bis 5, **dadurch gekennzeichnet,** daß bei Verwendung von Polypropylen (Polypropylen-Copolymere) für die Außenschicht(en) als Kernschicht(en) Äthylen-Vinyl-Alkohol-Copolymer mit einem Kristallitschmelzpunkt von über 160°C, vorzugsweise 164°C verwendet wird.

7. Verfahren nach einem der Ansprüche 1 bis 6, **dadurch gekennzeichnet,** daß für die Kernschicht(en) Äthylen-Vinyl-Alkohol-Copolymer mit einem Vinylalkoholgehalt von über 40 Mol-%, vorzugsweise von 50 Mol-% bis 70 Mol-% verwendet wird.

8. Verfahren nach einem der Ansprüche 1 bis 7, **dadurch gekennzeichnet,** daß die dielektrische Erwärmung der Kernschicht(en), insbesondere der Äthylen-Vinyl-Alkohol-Copolymer-Schicht(en) bis auf eine Temperatur über dem Kristallitschmelzpunkt des Materials der Kernschicht(en) erfolgt.

9. Verfahren nach einem der Ansprüche 1 bis 8, **dadurch gekennzeichnet,** daß das Flächenreckverhältnis der Mehrschichtenfolie unter Verwendung von Polypropylen-Schichten und Schichten aus Äthylen-Vinyl-Alkohol-Copolymer vorzugsweise 40:1 bis 50:1 beträgt.

10. Vorrichtung zur Durchführung des Verfahrens nach einem der Ansprüche 1 bis 9 mit einem ersten Längsreckbereich und gegebenenfalls einem zweiten quer dazu orientierten Querreckbereich zur stufenweise oder simultanen Reckung, und mit einer thermischen Aufheizvorrichtung zur Vorheizung einer Kunststoff-Folienbahn, **dadurch gekennzeichnet,** daß in einer Vorheizgruppe vor oder im Bereich der Längsreckung (A) und/oder der Querreckung (B) eine Hochfrequenzheizvorrichtung (17; 19) angeordnet ist.

11. Vorrichtung nach Anspruch 10, **dadurch gekennzeichnet,** daß zur stufenweise biaxialen Verstreckung von Kunststoff-Folienbahnen zumindest vor einigen, vorzugsweise vor jeder Reckstufe eine Hochfrequenzheizvorrichtung (17; 19) vorgesehen ist.

Fig. 1

Fig. 2

2/4

0133188

13

11

17

1

A

15

19

19

B

1

21

Fig. 3

FIGUR 4

FIGUR 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-2 109 357 (DOYEN) <br> * das ganze Dokument, insbesondere Seite 6, Zeile 37 - Seite 8, Zeile 3; Figur 6 * <br> --- | 1,2,4 | B 29 D 9/00 |
| A | US-A-2 642 627 (MANN) <br> * das ganze Dokument, insbesondere Spalte 5, Zeilen 46-69; Figur 3 * <br> --- | 1 | |
| A | GB-A-2 001 576 (BELLAPLAST) <br> * Patentansprüche 1,16; Figur 7 * <br> --- | 1 | |
| A | US-A-4 217 161 (Y. MUNEKI et al.) <br> * das ganze Dokument, insbesondere Spalten 15,16; Beispiel 1 * <br> --- | 5-7 | |
| A | US-A-3 261 903 (CARR) <br> * Spalte 2, Zeile 61 - Spalte 3, Zeile 66; Figuren 1,2 * <br> --- | 10,11 | RECHERCHIERTE SACHGEBIETE (Int. Cl. ³) <br><br> B 29 C <br> B 29 D <br> B 32 B |
| A | DE-B-2 833 189 (BRÜCKNER) <br><br> ----- | | |

Der vorliegende Recherchenbericht wurde für alle Patentansprüche erstellt.

| Recherchenort <br> DEN HAAG | Abschlußdatum der Recherche <br> 14-02-1984 | Prüfer <br> WELSCH H.R. |
|---|---|---|